(19) Europäisches Patentamt
European Patent Office
Office européen des brevets

(11) EP 4 617 296 A1

(12) EUROPEAN PATENT APPLICATION
published in accordance with Art. 153(4) EPC

(43) Date of publication:
**17.09.2025 Bulletin 2025/38**

(21) Application number: **23903924.1**

(22) Date of filing: **11.12.2023**

(51) International Patent Classification (IPC):
***C08F 297/04*** (2006.01) ***C08F 212/08*** (2006.01)
***C08F 212/14*** (2006.01) ***C08F 212/12*** (2006.01)
***C08F 8/32*** (2006.01) ***C08J 5/22*** (2006.01)

(52) Cooperative Patent Classification (CPC):
**C08F 8/32; C08F 212/08; C08F 212/12; C08F 212/14; C08F 297/04; C08J 5/22;** Y02E 60/50

(86) International application number:
**PCT/KR2023/020314**

(87) International publication number:
**WO 2024/128721 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 KR 20220176765**

(71) Applicant: **Hanwha Solutions Corporation**
**Jung-gu**
**Seoul 04541 (KR)**

(72) Inventors:
- **RYU, Du Yeol**
  **Seoul 03722 (KR)**
- **KIM, Jong Hak**
  **Seoul 03722 (KR)**
- **JEON, Seungbae**
  **Seoul 03722 (KR)**
- **KIM, Jinhee**
  **Seoul 03722 (KR)**

(74) Representative: **Berggren Oy**
**P.O. Box 16**
**Eteläinen Rautatiekatu 10A**
**00101 Helsinki (FI)**

# (54) NEW POLYMER AND ANION EXCHANGE MEMBRANE COMPRISING SAME

(57) The present invention relates to a novel polymer and an anion exchange membrane comprising the same and thus having improved ion conductivity and durability.

【FIG. 1】

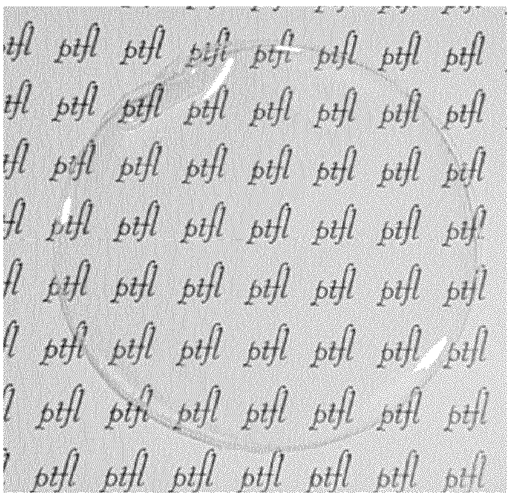



Processed by Luminess, 75001 PARIS (FR)

## Description

### [TECHNICAL FIELD]

CROSS-REFERENCE TO RELATED APPLICATION(S)

This application claims the benefit of Korean Patent Application No. 10-2022-0176765 filed on December 16, 2022 with the Korean Intellectual Property Office, the disclosure of which is incorporated herein by reference in its entirety.

The present invention relates to a novel polymer and an anion exchange membrane comprising the same and thus having improved ion conductivity and durability.

### [BACKGROUND ART]

Anion exchange membranes refer to membranes that has positively charged ionic groups, which make it difficult for cations to pass through due to the repulsion of the same electric charges, and selectively allow only anions to pass through.

Since alkaline electrolysis cells(AEC) using such anion exchange membranes can use low-priced metals such as nickel and manganese as electrode catalysts instead of a precious metal platinum, it can overcome the drawbacks (high price, fuel crossover, etc.) of existing commercially available cation exchange membranes based on the advantage of low price, and thus can be widely used in electrochemical devices such as fuel cells, water electrolytic cells, and redox flow cells.

However, the anion exchange membranes up to the present have lower ion conductivity as compared to cation exchange membranes and have difficulties in commercializing due to chemical/mechanical stability issues under basic conditions. Therefore, in order to develop AEC water electrolytic cells to ensure competitiveness in hydrogen production, a technology is needed to manufacture high-performance, highly durable anion exchange membranes at a lower cost than before.

Therefore, there is a continuing demand for the development of anion exchange membranes that are cost-competitive and have improved ionic conductivity and durability.

### [DETAILED DESCRIPTION OF THE INVENTION]

### [Technical Problem]

It is an object of the present disclosure to provide a novel polymer, a method for producing the same, an anion exchange membrane comprising the novel polymer and thus having improved ion conductivity and durability, and a method for producing the anion exchange membrane.

### [Technical Solution]

According to one embodiment of the present invention, there is provided a polymer comprising a crosslinked structure represented by the following Chemical Formula 1:

[Chemical Formula 1]

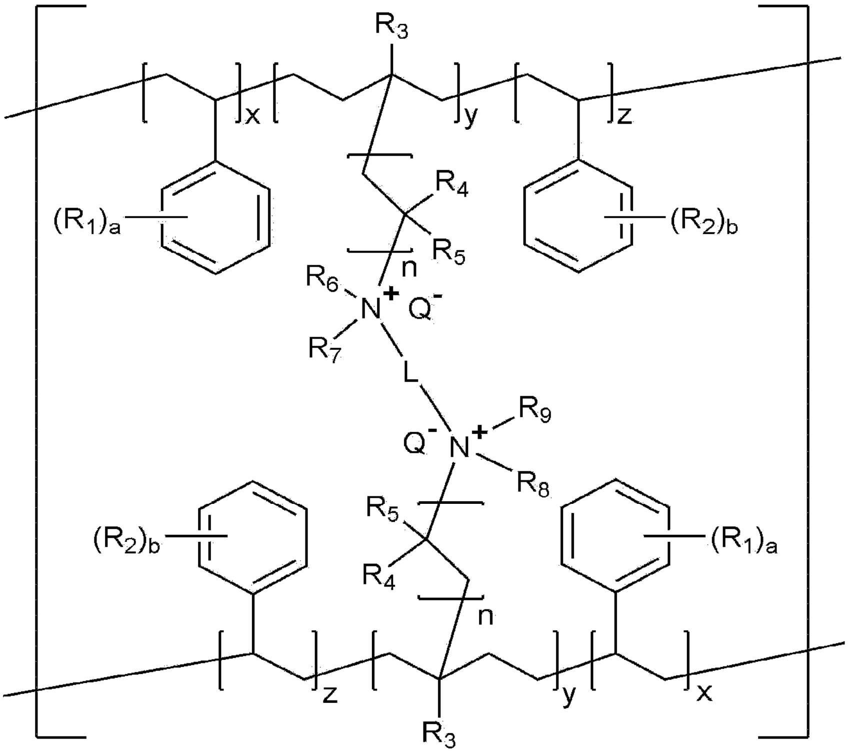

wherein, in Chemical Formula 1,

$R_1$ and $R_2$ are each independently halogen or a $C_{1-4}$ alkyl,
a and b are each independently an integer from 0 to 3,
$R_3$ and $R_4$ are each independently hydrogen or a $C_{1-4}$ alkyl,
$R_5$ is a $C_{1-10}$ alkyl,
$R_6$ to $R_9$ are each independently a $C_{1-4}$ alkyl,
L is a $C_{1-10}$ alkylene,
Q is halogen,
n is an integer from 1 to 3, and
x, y and z each means the mole fraction of each repeating unit in the polymer.

According to another embodiment of the present invention, there is provided a method for producing a polymer comprising a crosslinked structure represented by the following Chemical Formula 1, the method comprising the steps of:

reacting a first polymer, which is an A-B-C triblock copolymer represented by the following Chemical Formula 1-1, with a hydrogen halide to produce a second polymer, which is an A-B'-C triblock copolymer represented by the following Chemical Formula 1-2 (step 1);
reacting a second polymer represented by the following Chemical Formula 1-2 with an alkene represented by the following Chemical Formula 1a to produce a third polymer, which is an A-B"-C triblock copolymer represented by Chemical Formula 1-3 (step 2); and
reacting a third polymer represented by the following Chemical Formula 1-3 with a diamine represented by the following Chemical Formula 1b to produce a polymer comprising a crosslinked structure represented by Chemical Formula 1 (step 3):

[Chemical Formula 1-1]

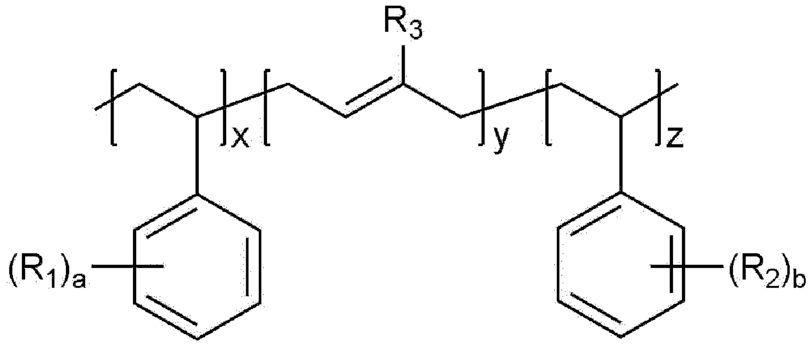

[Chemical Formula 1-2]

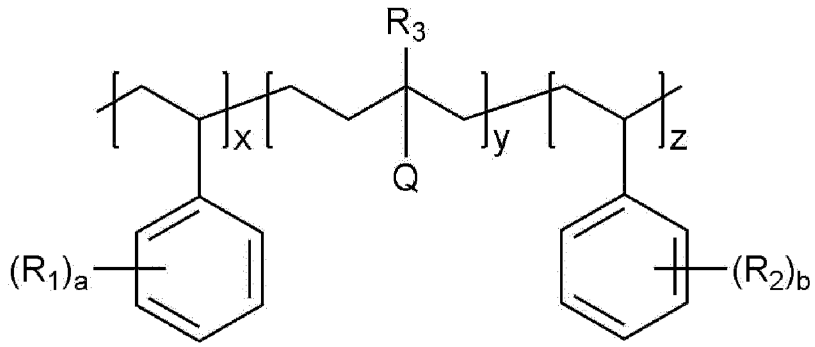

[Chemical Formula 1-3]

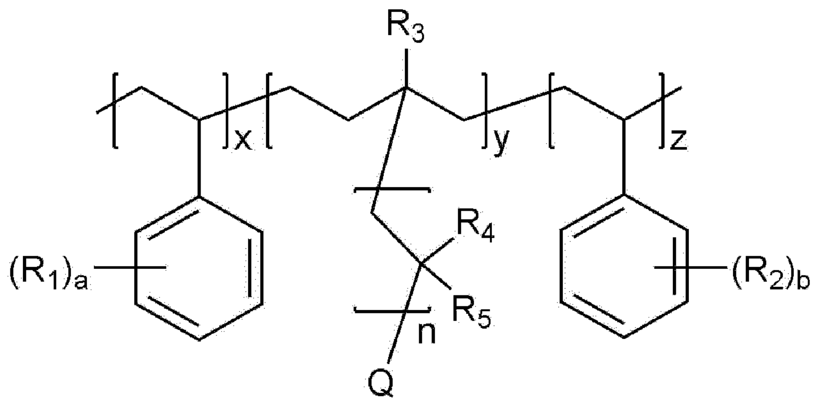

[Chemical Formula 1a]

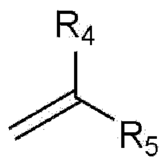

[Chemical Formula 1b]

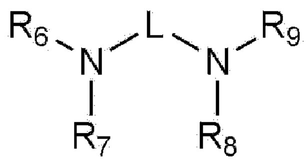

wherein, in Chemical Formulas 1-1 to 1-3, 1a and 1b,
$R_1$ to $R_9$, L, Q, a, b, n, x, y and z are as defined in Chemical Formula 1.

According to another embodiment of the present invention, there is provided an anion exchange membrane comprising the above-mentioned polymer.

According to yet another embodiment of the present invention, there is provided a method for producing an anion exchange membrane, the method comprising the steps of:

reacting a third polymer represented by Chemical Formula 1-3 with a diamine represented by Chemical Formula 1b in an organic solvent to produce a polymer solution comprising a crosslinked structure represented by Chemical Formula 1 (step 1); and
casting the polymer solution onto a substrate and then drying the casted film (step 2).

**[Advantageous Effects]**

The novel polymer of the present invention not only reduces the cost of the preparation process by using a styrene-isoprene-styrene triblock copolymer, which has the advantage that the synthesis process is simple and the process cost is low, but also can subsequently lengthen a distance between the ionic bond and the main chain through atom transfer radical polymerization of the copolymer, thereby improving the ionic conductivity of the anion exchange membrane comprising the same. In addition, fine phase separation is achieved through the formation of several tens of nanostructures, which facilitates the movement of ions through nanochannels, and the mechanical strength is extremely superior to that of a single polymer, thereby improving the durability of an anion exchange membrane comprising the polymer.

**[BRIEF DESCRIPTION OF THE DRAWINGS]**

FIG. 1 is a photograph of the anion exchange membrane produced in Example 1.
FIG. 2 shows the $^1$H NMR analysis spectra of the second polymer (SIS-Cl) and the third polymer (SIS-hex-Cl) produced in Example 1.
FIG. 3 shows the $^1$H NMR analysis spectrum of the first polymer (SIS), which is the starting material of Example 1.
FIG. 4 shows the FT-IR analysis spectra of the first polymer (SIS), which is the starting material of Example 1 and the second polymer (SIS-Cl), the third polymer (SIS-hex-Cl), and the anion exchange membrane (Xl-SIS-hex-QA) produced in Example 1.

**[DETAILED DESCRIPTION OF THE EMBODIMENTS]**

Technical terms used herein is for the purpose of describing exemplary embodiments only and is not intended to limit the scope of the invention. The singular forms "a," "an" and "the" are intended to include plural forms, unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" layers or elements, it means that the layer or element is directly formed on the layers or elements, or it means that other layers or elements may be additionally formed between the layers, on an object, or on a substrate.

Although the present invention may have various forms and various modifications can be made thereto, specific examples will be exemplified and explained in detail. However, it is not intended to limit the present invention to any specific disclosed form, and it should be understood that all the modifications, equivalents or substitutions within the idea and

technical scope of the present invention are included in the present disclosure.

Further, technical terms used herein are only for mentioning specific embodiments and they are not intended to restrict the present invention. The singular expressions used herein may include the plural expressions unless they are differently expressed contextually.

On the other hand, the term "polymer" as used herein refers to a compound produced by polymerizing monomer compounds, and includes both a homopolymer and a copolymer.

Further, as used herein, the alkyl group may be straight-chain or branched-chain, and the carbon number thereof is not particularly limited, but is preferably 1 to 10. According to one embodiment, the carbon number of the alkyl group is 1 to 6. According to another embodiment, the carbon number of the alkyl group is 1 to 4. Specific examples of the alkyl group include methyl, ethyl, propyl, n-propyl, isopropyl, butyl, n-butyl, isobutyl, tert-butyl, sec-butyl, 1-methylbutyl, 1-ethyl-butyl, pentyl, n-pentyl, isopentyl, neopentyl, tert-pentyl, 1-ethyl-propyl, 1,1-dimethylpropyl, hexyl, n-hexyl, 1-methylpentyl, 4-methyl-2-pentyl, 3,3-dimethylbutyl, 2-ethylbutyl, heptyl, n-heptyl, 1-methylhexyl, 2-methylhexyl, 3-methylhexyl, 4-methylhexyl, 5-methylhexyl, cyclopentylmethyl, cyclohexylmethyl, octyl, n-octyl, tert-octyl, 1-methylheptyl, 2-ethylhexyl, 2,4,4-trimethyl-1-pentyl, 2,4,4-trimethyl-2-pentyl, 2-propylpentyl, n-nonyl, 2,2-dimethylheptyl, and the like, but are not limited thereto.

Further, in the present invention, the description of the alkyl group as defined above can be applied except that the alkylene group is not a monovalent group but a divalent group.

In the present invention, the halogen means fluoro, chloro, bromo, or iodo.

In recent years, as the demand for fuel cells as a next-generation energy source has increased, interest in anion exchange membranes has increased in order to overcome the limitations of cation exchange membrane fuel cells. However, when the degree of crosslinking is increased in order to increase durability such as dimensional stability and alkali stability of an anion exchange membrane, there is a problem that ionic conductivity decreases.

In this regard, the present inventors have found that polymers in which a halogenated alkyl group is introduced into the side chain is produced by a hydrogenation reaction and an atom transfer radical polymerization reaction of a styrene-isoprene-styrene triblock copolymer, and then the polymers crosslinked with a diamine compound can lengthen a distance between the ionic bond and the main chain to improve ionic conductivity, and at the same time, fine phase separation is achieved through the formation of several tens of nanostructures, which facilitates the movement of ions through nanochannels, and the mechanical strength is far superior to that of a single polymer, thereby capable of producing an anion exchange membrane having improved durability, and completed the present invention.

Now, the novel polymer, a method for producing the same, an anion exchange membrane comprising the same, and a method for producing the anion exchange membrane according to specific embodiments of the invention will be described in more detail.

**Polymer and method for producing the same**

In one embodiment, a polymer comprising a crosslinked structure represented by the following Chemical Formula 1 is provided:

[Chemical Formula 1]

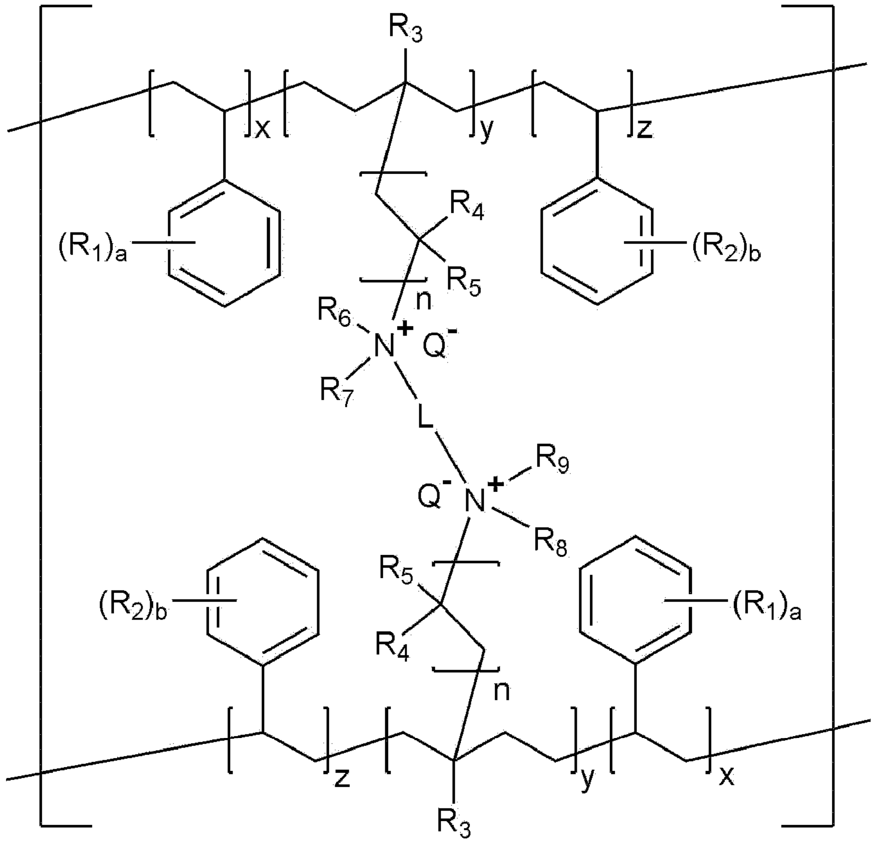

wherein, in Chemical Formula 1,

$R_1$ and $R_2$ are each independently halogen or a $C_{1-4}$ alkyl,
a and b are each independently an integer from 0 to 3,
$R_3$ and $R_4$ are each independently hydrogen or a $C_{1-4}$ alkyl,
$R_5$ is a $C_{1-10}$ alkyl,
$R_6$ to $R_9$ are each independently a $C_{1-4}$ alkyl,
L is a $C_{1-10}$ alkylene,
Q is halogen,
n is an integer from 1 to 3,
x, y and z each means the mole fraction of each repeating unit in the polymer, and x+y+z=1.

The polymer is an ionomer whose main chain in the polymer shows neutrality and whose side chain has an ionic bond, whereby the polymer exhibits ionic conductivity.

This polymer includes a crosslinked structure represented by Chemical Formula 1 and ultimately exhibits a shape of a membrane, and therefore the weight average molecular weight of the polymer can be considered unlimited. However, as an example, if the number of crosslinked structures represented by Chemical Formula 1 in the polymer is defined as m, m may be 1 to 100,000,000.

Further, the polymer may include not only a crosslinked structure represented by Chemical Formula 1, but also a non-crosslinked structure represented by the following Chemical Formula 2.

[Chemical Formula 2]

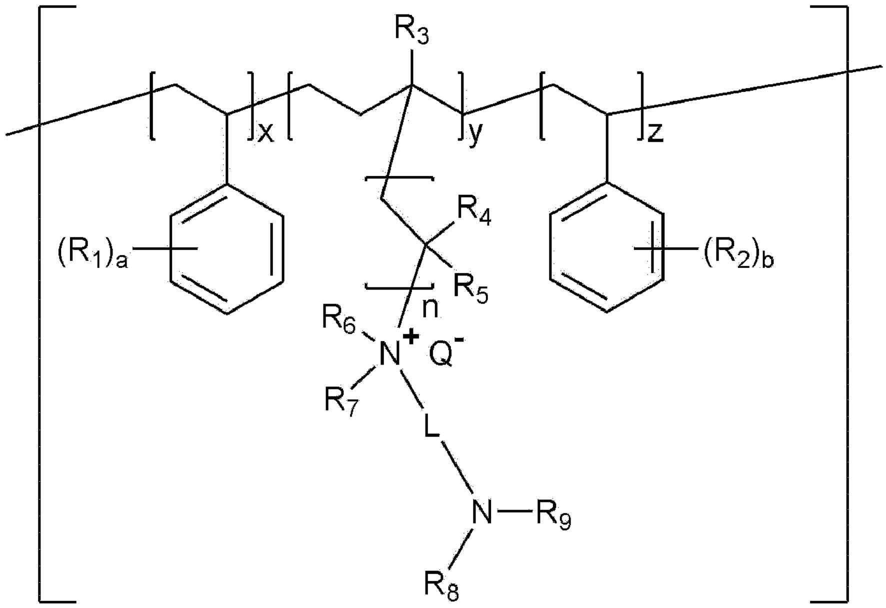

In other words, the polymer may have a partially crosslinked structure.
At this time, the crosslinked structure represented by Chemical Formula 1 and the non-crosslinked structure represented by Chemical Formula 2 may be included in the polymer at a molar ratio of 1:0.5 to 1: 10.
Further, in Chemical Formula 1, a and b mean the number of $R_1$ and $R_2$, respectively. When a is 2 or more, two or more $R_1$ may be the same or different from each other, and when b is 2 or more, two or more $R_2$ may be the same or different from each other.
More specifically, $R_1$ and $R_2$ are each independently chloro, bromo, methyl, or tert-butyl, and
a and b may be each independently 0 or 1.
At this time, $R_1$ and $R_2$ may be the same as each other, and
a and b may be the same as each other.
Further, $R_3$ and $R_4$ may be each independently hydrogen or methyl.
For example, $R_3$ may be methyl.
Further, for example, $R_4$ may be hydrogen.
Further, $R_5$ may be a $C_{1-10}$ alkyl.
For example, $R_5$ may be n-propyl, n-butyl, n-pentyl, n-hexyl, n-heptyl, or n-octyl.
Preferably, $R_4$ may be hydrogen, and
$R_5$ may be n-pentyl, n-hexyl, n-heptyl, or n-octyl.
Further, all of $R_6$ to $R_9$ may be the same.
For example, all of $R_6$ to $R_9$ may be methyl or ethyl.
Further, L may be a $C_{4-10}$ alkylene.
For example, L may be butylene, pentylene, hexylene, or heptylene.
Further, Q may be chloro(Cl).
In Chemical Formula 1, each of x, y and z is the value obtained by dividing the number of moles of the repeating unit within the parentheses by half of the number of moles of all repeating units in the crosslinked structure represented by Chemical Formula 1, and x+y+z is 1. Further, each of x, y and z is equal to the mole fraction of each block in the triblock copolymer used as a starting material for the preparation of the polymer containing the crosslinked structure represented by Chemical Formula 1. Specifically, when each block in the triblock copolymer is defined as A, B, and C, and the number of repetitions thereof is defined as a, b, and c, x may be calculated as a/(a+b+c), y as b/(a+b+c), and z as c/(a+b+c).
Specifically, x, y, and z are each independently a real number between more than 0 and less than 1.
More specifically, x and z may be each independently a real number between 0.01 and 0.5, and y may be a real number between 0.3 and 0.9.
For example, x is a real number between 0.1 and 0.25, y may be a real number from 0.5 to 0.8, and z may be a real number from 0.1 to 0.25.
Further, x+z may be 0.2 to 0.5. More specifically, x+z may be 0.2 or more, 0.21 or more. 0.22 or more, 0.23 or more, or 0.24 or more, and 0.5 or less, 0.45 or less, 0.4 or less, 0.35 or less, 0.3 or less, or 0.25 or less.
At this time, x and z may be the same as each other.

Further, y may be more specifically 0.5 or more, 0.55 or more, 0.6 or more, 0.65 or more, 0.7 or more, or 0.75 or more, and 0.8 or less, 0.79 or less, 0.78 or less, or 0.77 or less, 0.76 or less.

Further, the polymer may be derived from a triblock copolymer represented by the following Chemical Formula 1-1 having a weight average molecular weight of 50,000 to 400,000 g/mol:

[Chemical Formula 1-1]

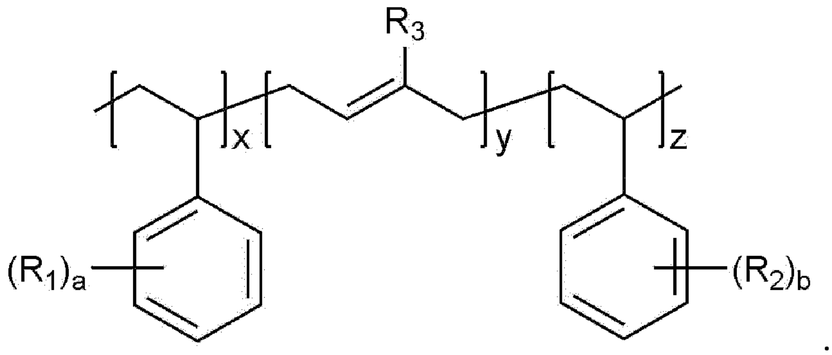

wherein, in Chemical Formula 1-1,

$R_1$, $R_2$, a, b, x, y and z are as defined in Chemical Formula 1.

In another embodiment, there is provided a method for producing a polymer comprising a crosslinked structure represented by Chemical Formula 1, which is produced through steps 1 to 3 of the following Reaction Scheme 1:

[Reaction Scheme 1]

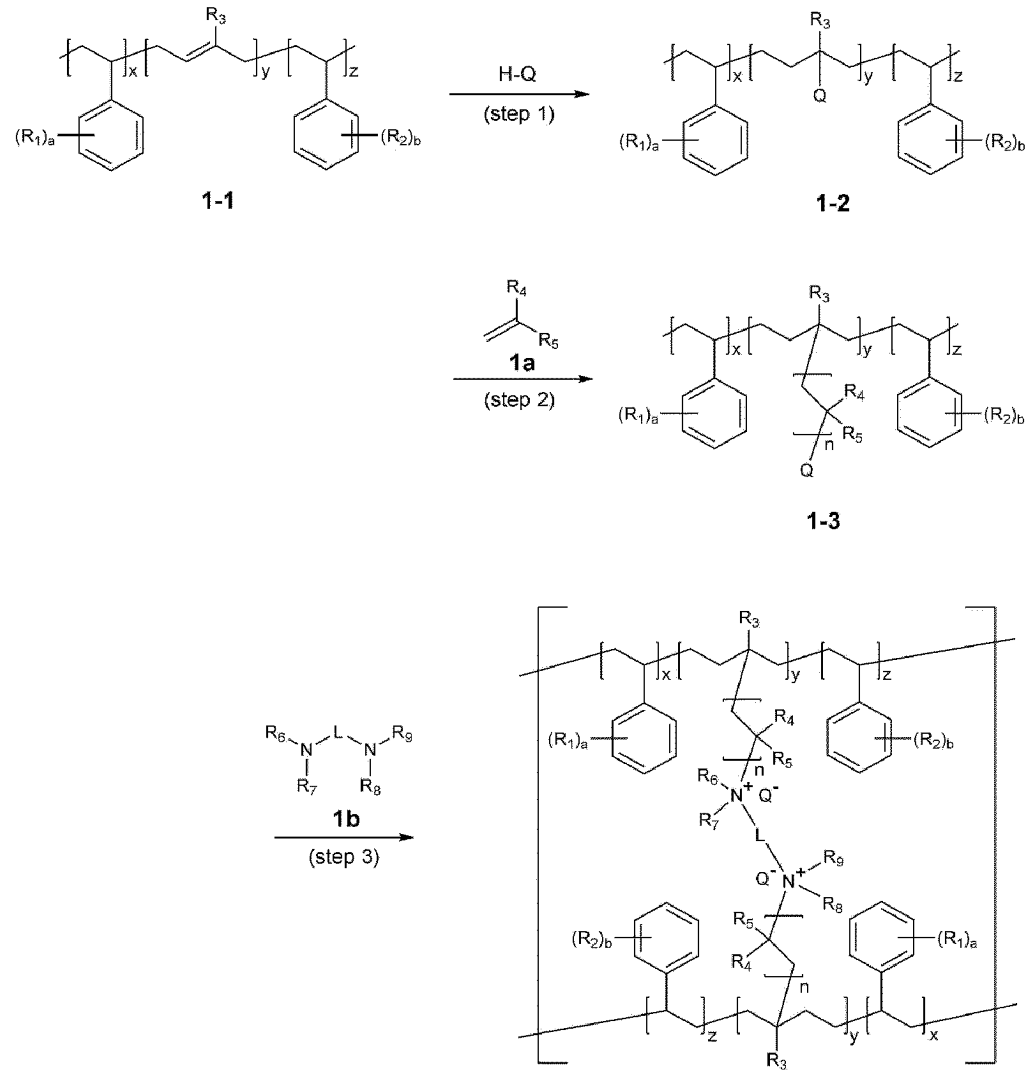


1-1

1-2

1-3

1

wherein, in Reaction Scheme,
$R_1$ to $R_9$, L, Q, a, b, n, x, y and z are as defined in Chemical Formula 1.

**(Step 1)**

Step 1 is a step of reacting a first polymer, which is an A-B-C triblock copolymer represented by Chemical Formula 1-1, with a hydrogen halide (H-Q; where Q is halogen) to produce a second polymer, which is an A-B'-C triblock copolymer represented by Chemical Formula 1-2, wherein the reaction is a halogenation addition reaction in which a hydrogen halide is added to a double bond in the first polymer.

The first polymer represented by Chemical Formula 1-1 is an A-B-C triblock copolymer produced by copolymerization of a styrene-based monomer, a conjugated diene-based monomer having 4 carbon atoms, and a styrene-based monomer, and has a one-dimensional linear polymer structure in which repeating units are arranged in long chains. More specifically, in the first polymer, the A block means a block represented by the following Chemical Formula A, the B block means a block represented by the following Chemical Formula B, and the C block means a block represented by the following Chemical Formula C.

[Chemical Formula A]

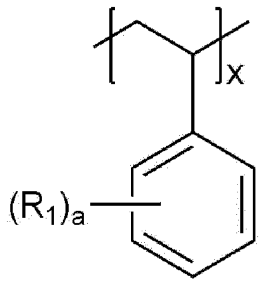

[Chemical Formula B]

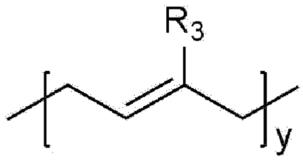

[Chemical Formula C]

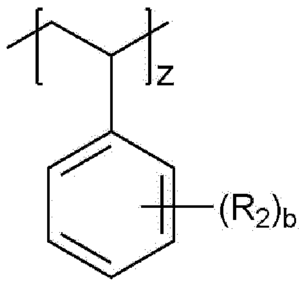

.

As an example, considering ease of synthesis and production costs, it is preferable that the first polymer represented by Chemical Formula 1-1 is a styrene-isoprene-styrene triblock copolymer (Styrene-b-Isoprene-b-Styrene; SIS).

Further, the first polymer may have a weight average molecular weight of 50,000 to 400,000 g/mol as described above. Here, the weight average molecular weight of the triblock copolymer can be determined according to gel permeation chromatography (GPC) using calibration curves created with polystyrene standards. More specifically, the weight average molecular weight (Mw, g/mol) of the polymer may be 50,000 or more, 60,000 or more, 70,000 or more, or 80,000 or more, and 400,000 or less, 300,000 or less, 200,000 or less, or 100,000 or less.

In the above step, the hydrogen halide may be used in an amount of 2 to 3 moles relative to 1 mole of the B block unit in the first polymer represented by Chemical Formula 1-1. If the hydrogen halide is used in an excessively low amount, there is a risk that the reaction time will become longer, and even if the hydrogen halide is used in an excessively large amount, there is no difference in reaction time, and thus, the hydrogen halide is preferably used within the above-mentioned range. More specifically, in the above step, the hydrogen halide may be used in an amount of 2 moles or more, 2.1 moles or more, 2.2 moles or more, 2.3 moles, more, 2.4 moles, or more, or 2.5 mol or more, and 3 moles or less, or 2.95 mol or less relative to 1 mole of the B block unit in the first polymer represented by Chemical Formula 1-1.

Further, the reaction may be carried out in an organic solvent such as toluene, dichloromethane, chloroform, dimethylformamide, dioxane, tetrahydrofuran, or the like. Here, the organic solvent may be used in an amount (mL/g) of 5 to 20 times (volume) the weight of the first polymer represented by Chemical Formula 1-1, and more specifically, it may be used in an amount (mL/g) of 10 to 15 times (volume).

Further, the reaction can be carried out at 20 to 30°C for 12 to 24 hours. The above range is preferable from the viewpoint of reaction rate and production yield.

**(Step 2)**

Step 2 is a step of reacting a second polymer, which is an A-B'-C triblock copolymer represented by Chemical Formula 1-2, with an alkene represented by Chemical Formula 1a to produce a third polymer, which is an A-B"-C triblock

copolymer represented by Chemical Formula 1-3, wherein the reaction proceeds by atom transfer radical polymerization (ATRM).

In the second polymer, the A block and the C block are the same as described above, and the B' block means a block represented by the following Chemical Formula B'.

[Chemical Formula B']

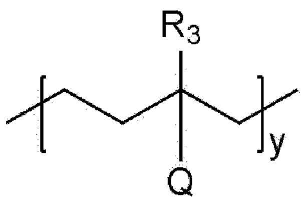

In the above step, the alkene represented by Chemical Formula 1a may be used in amounts of 10 to 100 moles relative to 1 mole of the B' block unit in the second polymer represented by Chemical Formula 1-2. If the alkene is used in an excessively low amount, the length of the side chain may become short and thus, the durability of the membrane may be reduced, and if the alkene is used in an excessively large amount, there is a problem of inhibiting the reaction, and thus, the alkene is preferably used in the above-mentioned range. More specifically, in the above step, the alkene represented by Chemical Formula 1a may be used in an amount of 10 moles or more, 20 moles or more, 30 moles or more, or 40 moles or more, and 100 moles or less, 90 moles or less, 80 moles or less, 70 moles or less, or 60 moles or less relative to 1 mole of the B' block unit in the second polymer represented by Chemical Formula 1-2.

Further, the reaction may be carried out in an organic solvent such as toluene, dichloromethane, chloroform, dimethylformamide, dioxane, dimethylformamide, tetrahydrofuran, or the like. Here, the organic solvent may be used in an amount (mL/g) of 10 to 30 times(volume) the weight of the second polymer represented by Chemical Formula 1-2, and more specifically, it can be used in an amount (mL/g) of 15 to 20 times (volume).

Further, the reaction may be carried out at 50 to 100°C for 1 hour to 72 hours. The above-mentioned range is preferable from the viewpoint of reaction rate and producing yield.

**(Step 3)**

Step 3 is a step of reacting a third polymer, which is an A-B"-C triblock copolymer represented by Chemical Formula 1-3, with a diamine represented by Chemical Formula 1b to produce a polymer comprising a crosslinked structure represented by Chemical Formula 1, wherein two third polymers represented by Chemical Formula 1-3 are crosslinked by diamine through the above reaction.

In the third polymer, the A block and the C block are the same as described above, and the B" block means a block represented by the following Chemical Formula B".

[Chemical Formula B"]

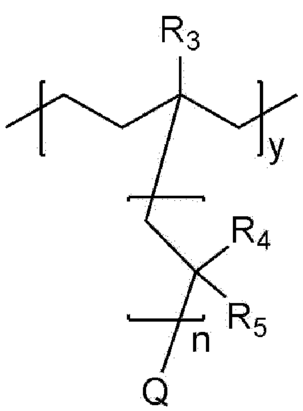

In the above step, the diamine represented by Chemical Formula 1b may be used in an amount of 0.1 to 0.3 mole relative to 1 mole of the B" block unit in the third polymer represented by Chemical Formula 1-3. If the diamine is used in an excessively low amount, there is a risk that crosslinking decreases and thus, the mechanical properties of the membrane

may deteriorate, and if the diamine is used in an excessively large amount, there is a risk that the ionic conductivity may decrease or the physical properties of the membrane may deteriorate due to residual unreacted diamine, and thus, diamine is preferable used in the above-mentioned range. More specifically, in the above step, the diamine represented by Chemical Formula 1b may be used in an amount of 0.1 mole or more, 0.11 mole or more, 0.12 mole or more, 0.13 mole or more, or 0.14 mole or more, and 0.3 mole or less, 0.25 mole or less, 0.2 mole or less, 0.19 mole or less, 0.18 mole or less, 0.17 mole or less, or 0.16 mole or less, relative to 1 mole of the B" block unit in the third polymer represented by Chemical Formula 1-3.

Further, the reaction may be carried out in one or more organic solvents selected from the group consisting of tetrahydrofuran, chloroform, dichloromethane, and toluene. Here, the organic solvent may be used in an amount (mL/g) of 10 to 30 times (volume) the weight of the third polymer represented by Chemical Formula 1-3, and more specifically, it may be used in an amount (mL/g) of 15 to 25 times (volume).

Further, the reaction may be carried out by stirring at 20 to 30°C for 1 minute to 3 hours.

More specifically, after the stirring, the organic solvent is removed under vacuum at 40 to 80°C for 12 to 24 hours, and then the reaction is further carried out under vacuum at 80 to 150°C for 24 to 72 hours.

**Anion exchange membrane and method for producing the same**

On the other hand, in another embodiment, there is provided an anion exchange membrane comprising a polymer including a crosslinked structure represented by Chemical Formula 1.

In yet another embodiment, there is provided a method for producing the above-described anion exchange membrane, comprising the following steps 1 to 3.

reacting a third polymer represented by Chemical Formula 1-3 with a diamine represented by Chemical Formula 1b in an organic solvent to produce a polymer solution comprising a crosslinked structure represented by Chemical Formula 1 (step 1); and

casting the polymer solution onto a substrate and then drying the casted film (step 2).

**(Step 1)**

Step 1 is a step of crosslinking the third polymer represented by Chemical Formula 1-3 using a diamine compound as a crosslinking agent in an organic solvent, and producing it in the form of a polymer solution to facilitate the coating operation for producing in the form of a film.

In step 1, the organic solvent may be one or more selected from the group consisting of tetrahydrofuran, chloroform, dichloromethane, and toluene. Here, the organic solvent may be used in an amount (mL/g) of 10 to 30 times (volume) the weight of the third polymer represented by Chemical Formula 1-3, and more specifically, it may be used in an amount (mL/g) of 15 to 25 times (volume).

**(Step 2)**

Further, step 2 is a step of casting the polymer solution onto a substrate and then drying the casted film. In the above step, the polymer solution is applied to a substrate to a certain thickness and then dried to remove the organic solvent of step 1, thereby producing a film-type membrane.

The substrate used at this time can be a glass substrate that can easily release the cast anion exchange membrane. Further, the polymer solution may be applied onto the substrate to a thickness of 20 to 80μm.

Further, the drying in step 2 may be carried out at 40 to 80°C for 12 to 24 hours. Specifically, the drying may proceed through vacuum drying, and the organic solvent in step 1 can be completely removed by the drying step.

Further, after step 2, a step of heat treatment at 80 to 150°C for 24 to 72 hours may be further carried out. The heat treatment may proceed in a vacuum, and a crosslinking reaction may further proceed through the heat treatment step.

The anion exchange membrane produced through this process can be produced to a thickness of 20 to 80μm.

On the other hand, in another embodiment, there is provided a fuel cell including the anion exchange membrane described above.

Furthermore, in another embodiment, there is provided an alkaline electrolysis cell including the anion exchange membrane described above.

Hereinafter, the preferred examples are provided for better understanding the present invention. However, these examples are for illustrative purposes only, and the scope of the invention is not limited to or by them.

**Example 1: Production of a polymer containing a crosslinked structure represented by XL-SIS-hex-Cl and an anion exchange membrane containing the same**

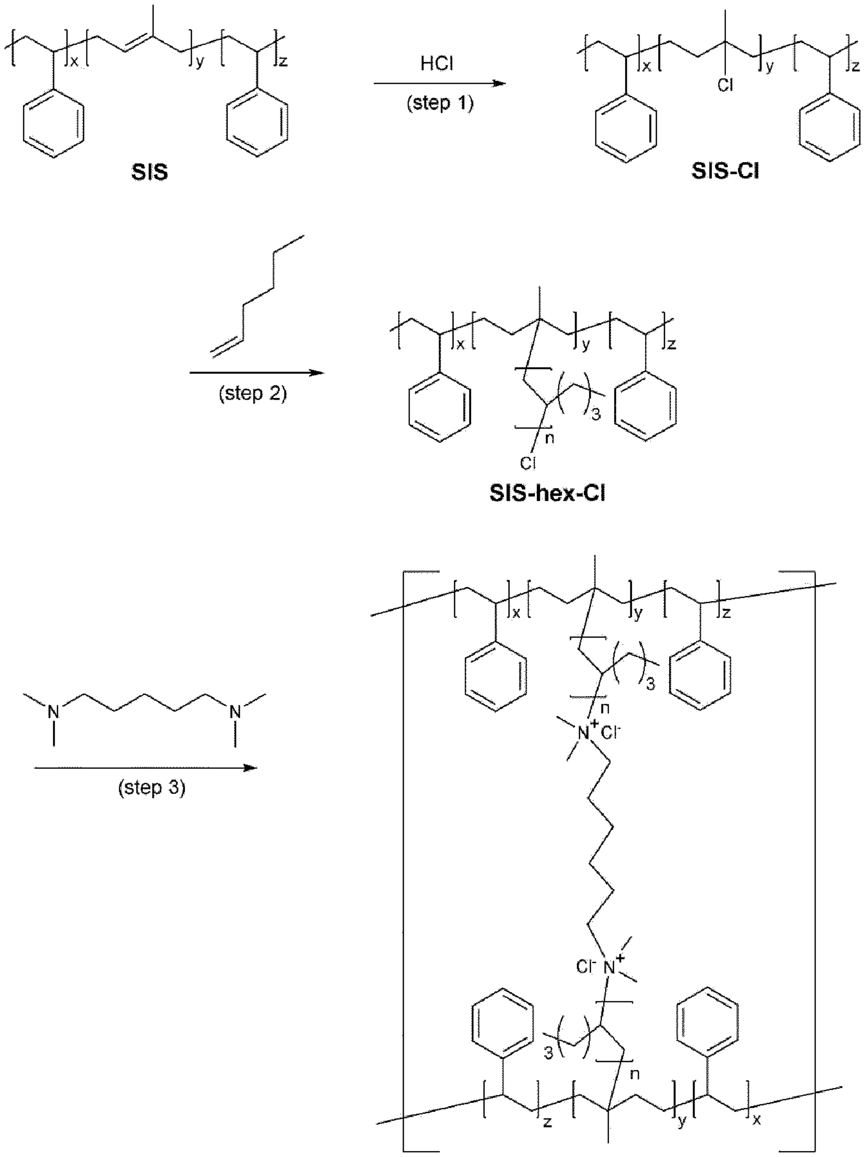

SIS
SIS-Cl
SIS-hex-Cl

**1 (XL-SIS-hex-Cl)**

**(Step 1) Hydrochlorination**

In a 250 mL flask, 5 g of the first polymer, i.e., styrene-isoprene-styrene triblock copolymer (Styrene-b-Isoprene-b-Styrene; SIS, number of each block in the copolymer - styrene (136), isoprene (838), styrene (136); x = 0.1225, y= 0.7550, z=0.1225); Mw = 90,000 g/mol) (number of moles of isoprene which is the B block in 5 g: 0.04194 mmol), toluene 120 mL, hydrogen chloride 120 mL dissolved in acetic acid (pure hydrogen chloride: 3 mL, 0.1226 mmol, 2.923 mol relative to 1 mole of isoprene) and a magnetic bar were added, and the mixture was allowed to react at room temperature for 24 hours. After completion of the reaction, precipitates were collected in 5 L of methanol, then precipitates were collected in 5 L of methanol again, water and solvent were removed under vacuum at room temperature, and a chloro group-substituted styrene-isoprene-styrene second polymer (SIS-Cl) was obtained.

**(Step 2) ATRP (Alkylation)**

In a 250 mL flask, 5 g of the second polymer (SIS-Cl) obtained in step 1 (number of moles of isoprene-derived B' blocks in 5 g: 31.765 mmol), toluene 200 mL, 1-hexene 196.9 mL, 1588.5 mmol, 50 moles relative to 1 mole of the B' block), 1.8 g of copper(I) bromide, 2.6 mL of pentamethyldiethylenetriamine and a magnetic bar were added, and the mixture was allowed to react at 60°C for 1.5 hours. After completion of the reaction, the solution was filtered through an aluminum oxide column and the solvent was removed under vacuum at 60°C. Then, precipitates were collected in 2 L of methanol, then precipitates were collected in 2 L of methanol again, and water and solvent were removed under vacuum at room temperature to obtain a third polymer styrene-isoprene-styrene (SIS-hex-Cl) containing a 1-hexene unit and having a chloro group substituted at the end of the side chain.

**(Step 3) Crosslinking**

In a 20 mL vial, 0.3g of the third polymer (SIS-hex-Cl) obtained in step 2 (number of moles of isoprene-derived B" blocks in 0.3 g: 1.88 mmol), organic solvent tetrahydrofuran 6 mL, N,N,N',N'-tetramethyl-1,6-hexanediamine 0.0487 g, 0.283 mmol, 0.15 mole relative to 1 mole of B" block) and a magnetic bar were added, and the mixture was stirred at room temperature for 5 minutes to produce a polymer solution containing the crosslinked structure represented by XL-SIS-hex-Cl.

Subsequently, the polymer solution was uniformly applied to a Petri dish with a diameter of 9 cm to a thickness of 60 μm, casted, and dried in a vacuum at 60°C for 24 hours to remove the solvent, thereby producing a membrane.

Next, the above membrane was heat-treated in a vacuum state at 100°C for 48 hours to further advance the reaction, thereby obtaining a transparent anion exchange membrane (XL-SIS-hex-QA) with a thickness of 30 μm, a photograph of which is shown in FIG. 1.

**Test Example 1: $^1$H NMR analysis**

$^1$H NMR analysis spectra of the second polymer (SIS-Cl) and the third polymer (SIS-hex-Cl) produced in steps 1 and 2 of Example 1 are shown in FIG. 2. Also, to confirm whether the synthesis progressed well, the $^1$H NMR analysis spectrum of the first polymer (SIS) is shown in FIG. 3. At this time, $^1$H NMR spectra were obtained on an Agilent 400-MR (400 MHz) instrument using $CDCl_3$ as reference or internal deuterium locking device.

Comparing the spectrum of the second polymer(SIS-Cl) in FIG. 2 and the spectrum of the first polymer(SIS) in FIG. 3, it can be seen that in the case of the first polymer(SIS) in FIG. 3, the intensity of the peak at 4.5 to 5.3 ppm due to isoprene groups is high, whereas in the case of the second polymer(SIS-Cl) in FIG. 2, the peaks due to isoprene groups hardly appear. This means that the synthesis from the first polymer to the second polymer was carried out satisfactorily, and the conversion rate of the synthesis from the first polymer to the second polymer, which was calculated according to the ratio of the peaks of the isoprene group, was 98% or more.

Comparing the spectrum of the second polymer (SIS-Cl) and the third polymer (SIS-hex-Cl) in FIG. 2, it can be seen that in the case of the third polymer (SIS-hex-Cl), the peak at 2.2 ppm appearing at the third carbon shows a stronger intensity than the peak at 2.2 ppm of the second polymer (SIS-Cl).

Since this is due to the carbon represented by b which was introduced by the 1-hexene compound, it can be confirmed through comparison of these peaks that the synthesis of the third polymer from step 2 of Example 1 was carried out successfully.

On the other hand, the n value in the third polymer (SIS-hex-Cl) produced in step 2 of Example 1 can be confirmed by obtaining the integral value of the peak represented by a and the integral value of the peak represented by a + b in the 1H NMR analysis spectra of the second polymer (SIS-Cl) and the third polymer (SIS-hex-Cl). As a result of confirmation, n had a value of 1 to 3.

**Test Example 2: FT-IR analysis**

FT-IR analysis was carried out for each of the first polymer (SIS), which is the starting material of Example 1, and the second polymer (SIS-Cl), the third polymer (SIS-hex-Cl) and the anion exchange membrane (Xl-SIS-hex-QA) produced in Example 1, and the results are shown in FIG. 4.

Referring to FIG. 4, comparing the spectrum of the third polymer (SIS-hex-Cl) and the spectrum of the anion exchange membrane (Xl-SIS-hex-QA), it can be seen that in the case of the third polymer (SIS-hex-Cl), the peak at 985 $cm^{-1}$ due to carbon-nitrogen bond in the quaternary ammonium structure does not appear, whereas in the case of the anion exchange membrane (Xl-SIS-hex-QA), the intensity of the peak due to the carbon-nitrogen bond in the quaternary ammonium structure is high. Thereby, it can be confirmed that an anion exchange membrane (Xl-SIS-hex-QA) with a quaternary ammonium structure was successfully produced from the third polymer (SIS-hex-Cl).

**Test Example 3: Measurement of performance of anion exchange membrane**

The ion exchange ability of the anion exchange membrane produced in Example was measured by comparing and calculating the relative integral width between the protons of the aromatic and methyl groups in the $^1$H NMR spectrum. This is shown in Table 1 in comparison with a commercially available anion exchange membrane (Fumasep® FAA-3-50, produced by Fumatech).

Further, the moisture content and swelling degree of the anion exchange membrane and FAA-3-50 produced in Example were measured in $OH^-$ form. Specifically, after ion exchange, a specific form of membrane was washed several times with ultrapure water, and then the hydrated membrane was quickly wiped with a filter paper to remove water on the surface. Then, the weight ($m_{wet}$) and unidirectional length ($L_{wet}$) of the hydrated membrane were recorded, then the filter paper was covered to prevent the membrane from shrinking, and dried in a vacuum oven at 90°C for 24 hours to maintain a constant weight. The weight ($m_{dry}$) and unidirectional length ($L_{dry}$) of the dried membrane were then immediately recorded. Finally, the moisture content and swelling degree were calculated according to the following Equations 1 and 2, respectively, and the results are shown in Table 1 below.

[Equation 1]

$$\text{Moisture content (\%)}=[(m_{wet} - m_{dry})/m_{dry}] \times 100$$

[Equation 2]

$$\text{Swelling degree (\%)}=[(L_{wet} - L_{dry})/L_{dry}] \times 100$$

Further, the ion conductivity of the anion exchange membrane and FAA-3-50 produced in Example was determined under the 80°C/100% RH conditions after measuring the thickness of each anion exchange membrane using high-purity DI water from Deoksan Chemicals, and then connecting 4 probe conductivity cells from Bekktech to AC impedance, and the results are shown in Table 1 below.

[Table 1]

| | Anion exchange membrane | IEC (meq./g) | | Reactivity (%) | Moisture content (%) @ 25 °C | Swelling degree(%) @ 25 °C | Ion conductivity (mS/cm) @ 25 °C |
|---|---|---|---|---|---|---|---|
| | | Theo. | Exp. | | | | |
| Example 1 | XL-SIS-hex-QA | 2.54 | 2.00 | 78.74 | 20.1 | 12.7 | 3.5 |
| Comparat ive Example 1 | FAA-3-50 | 1.85 | 1.72 | 92.97 | 16.3 | 3.6 | 3.0 |

Referring to Table 1, it can be confirmed that the anion exchange membrane comprising the polymer containing a crosslinked structure represented by Chemical Formula 1 of Example 1 exhibits improved ion exchange performance, moisture content, swelling degree, and ionic conductivity as compared to the anion exchange membrane (FAA-3-50) of Comparative Example 1.

## Claims

**1.** A polymer comprising a crosslinked structure represented by the following Chemical Formula 1:

[Chemical Formula 1]

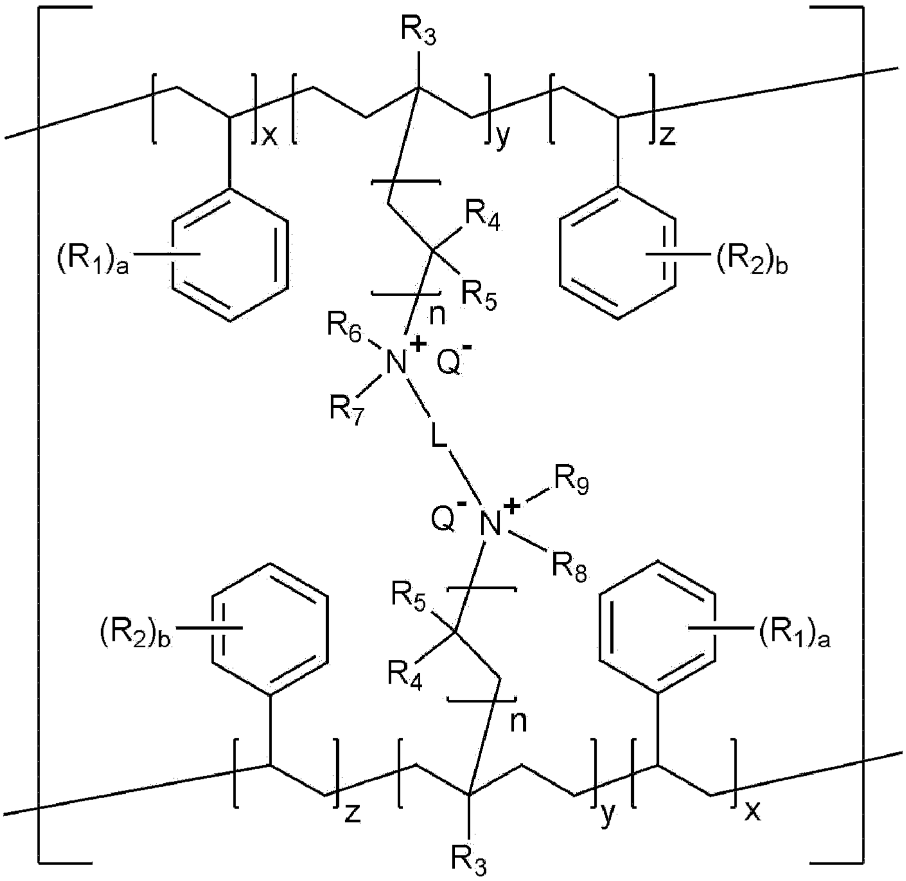

wherein, in Chemical Formula 1,

$R_1$ and $R_2$ are each independently halogen or a $C_{1-4}$ alkyl,
a and b are each independently an integer from 0 to 3,
$R_3$ and $R_4$ are each independently hydrogen or a $C_{1-4}$ alkyl,
$R_5$ is a $C_{1-10}$ alkyl,
$R_6$ to $R_9$ are each independently a $C_{1-4}$ alkyl,
L is a $C_{1-10}$ alkylene,
Q is halogen,
n is an integer from 1 to 3, and
x, y and z each means the mole fraction of each repeating unit in the polymer, and x+y+z=1.

**2.** The polymer according to claim 1, wherein:

$R_1$ and $R_2$ are each independently chloro, bromo, methyl, or tert-butyl, and
a and b are each independently 0 or 1.

**3.** The polymer according to claim 1, wherein:
$R_3$ is methyl.

**4.** The polymer according to claim 1, wherein:

$R_4$ is hydrogen, and
$R_5$ is n-propyl, n-butyl, n-pentyl, n-hexyl, n-heptyl, or n-octyl.

**5.** The polymer according to claim 1, wherein:
$R_6$ to $R_9$ are all methyl or ethyl.

**6.** The polymer according to claim 1, wherein:
L is butylene, pentylene, hexylene, or heptylene.

**7.** The polymer according to claim 1, wherein:
Q is chloro.

**8.** The polymer according to claim 1, wherein:
x+z is 0.2 to 0.5.

**9.** The polymer according to claim 1, wherein:

the polymer is derived from a triblock copolymer represented by the following Chemical Formula 1-1 having a weight average molecular weight of 50,000 to 400,000 g/mol.

[Chemical Formula 1-1]

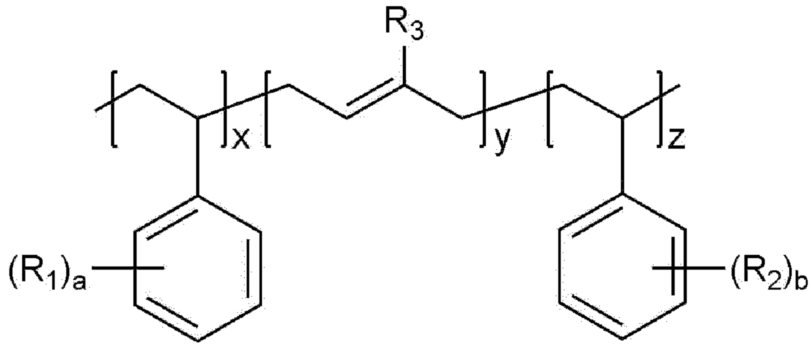

wherein, in Chemical Formula 1-1,
$R_1$, $R_2$, a, b, x, y and z are as defined in claim 1.

**10.** A method for producing a polymer comprising a crosslinked structure represented by the following Chemical Formula 1, the method comprising the steps of:

reacting a first polymer, which is an A-B-C triblock copolymer represented by the following Chemical Formula 1-1, with a hydrogen halide to produce a second polymer, which is an A-B'-C triblock copolymer represented by the following Chemical Formula 1-2 (step 1);
reacting a second polymer represented by the following Chemical Formula 1-2 with an alkene represented by the following Chemical Formula 1a to produce a third polymer, which is an A-B"-C triblock copolymer represented by the following Chemical Formula 1-3 (step 2); and
reacting a third polymer represented by the following Chemical Formula 1-3 with a diamine represented by the following Chemical Formula 1b to produce a polymer comprising a crosslinked structure represented by the following Chemical Formula 1 (step 3):

[Chemical Formula 1]

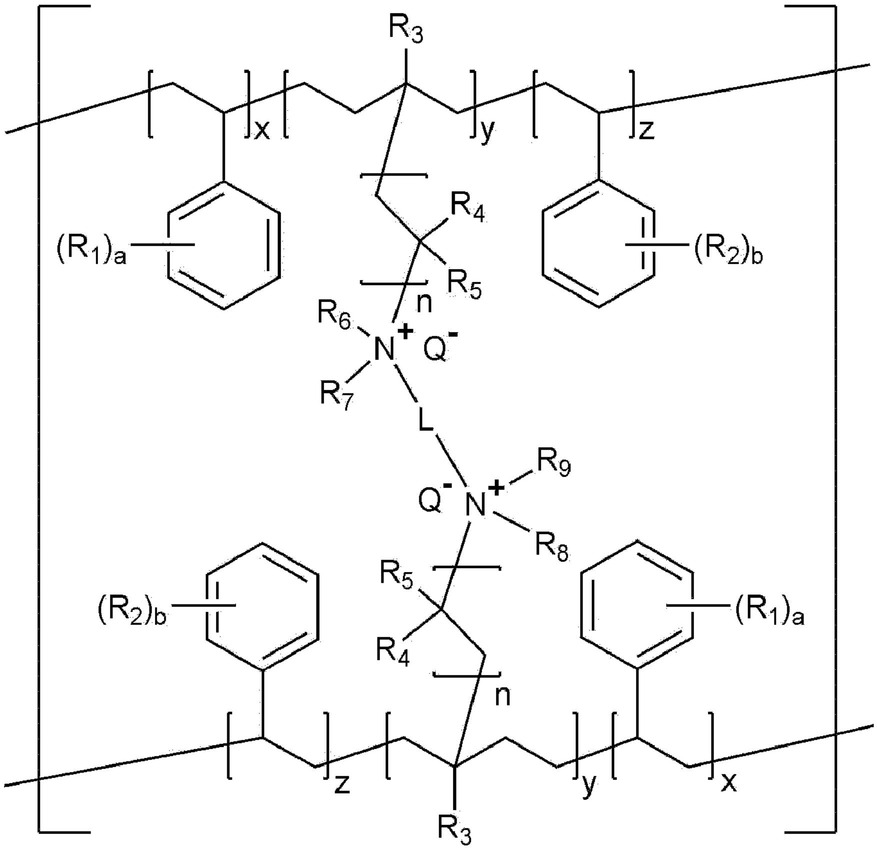

[Chemical Formula 1-1]

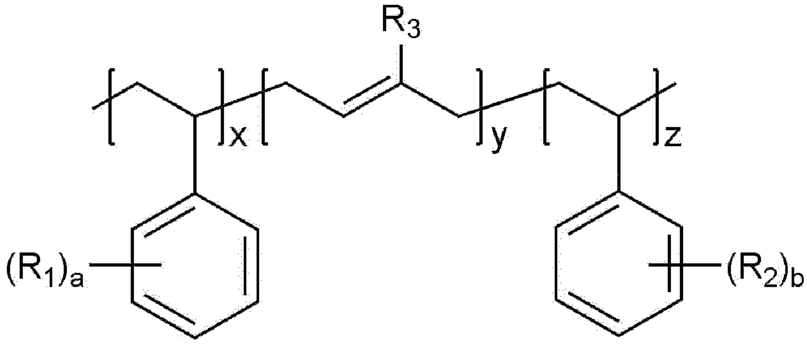

[Chemical Formula 1-2]

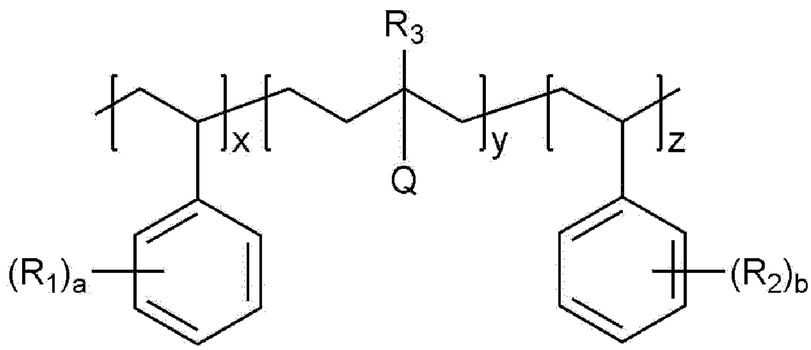

[Chemical Formula 1-3]

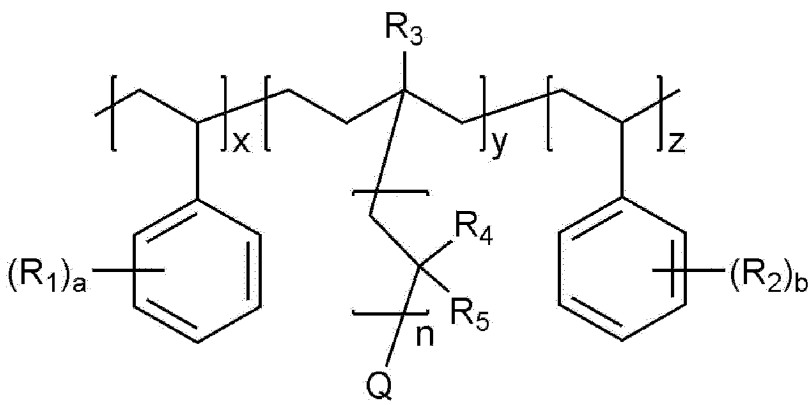

[Chemical Formula 1a]

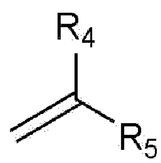

[Chemical Formula 1b]

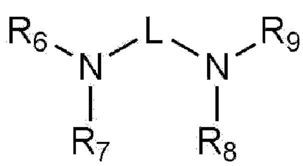

wherein, in Chemical Formulas 1, 1-1 to 1-3, 1a and 1b,
$R_1$ and $R_2$ are each independently halogen or a $C_{1-4}$ alkyl,
a and b are each independently an integer from 0 to 3,
$R_3$ and $R_4$ are each independently hydrogen or a $C_{1-4}$ alkyl,
$R_5$ is a $C_{1-10}$ alkyl,
$R_6$ to $R_9$ are each independently a $C_{1-4}$ alkyl,

L is a $C_{1-10}$ alkylene,
Q is halogen,
n is an integer from 1 to 3, and
x, y and z each means the mole fraction of each repeating unit in the polymer, and x+y+z=1.

**11.** The method according to claim, 10, wherein:
in step 1, the hydrogen halide is used in an amount of 2 to 3 moles relative to 1 mole of the B block unit in the first polymer represented by Chemical Formula 1-1.

**12.** The method according to claim, 10, wherein:
in step 2, the alkene represented by Chemical Formula 1a is used in an amount of 10 to 100 moles relative to 1 mole of the B' block unit in the second polymer represented by Chemical Formula 1-2.

**13.** The method according to claim, 10, wherein:
the reaction in step 2 is carried out at 50 to 100°C for 1 hour to 72 hours.

**14.** The method according to claim, 10, wherein:
in step 3, the diamine represented by Chemical Formula 1b is used in an amount of 0.1 to 0.3 mole relative to 1 mole of the B" block unit in the third polymer represented by Chemical Formula 1-3.

**15.** An anion exchange membrane comprising the polymer according to claim 1.

**16.** A method for producing an anion exchange membrane, the method comprising the steps of:

reacting a third polymer represented by the following Chemical Formula 1-3 with a diamine represented by the following Chemical Formula 1b in an organic solvent to produce a polymer solution comprising a crosslinked structure represented by the following Chemical Formula 1 (step 1); and
casting the polymer solution onto a substrate and then drying the casted film (step 2).

[Chemical Formula 1]

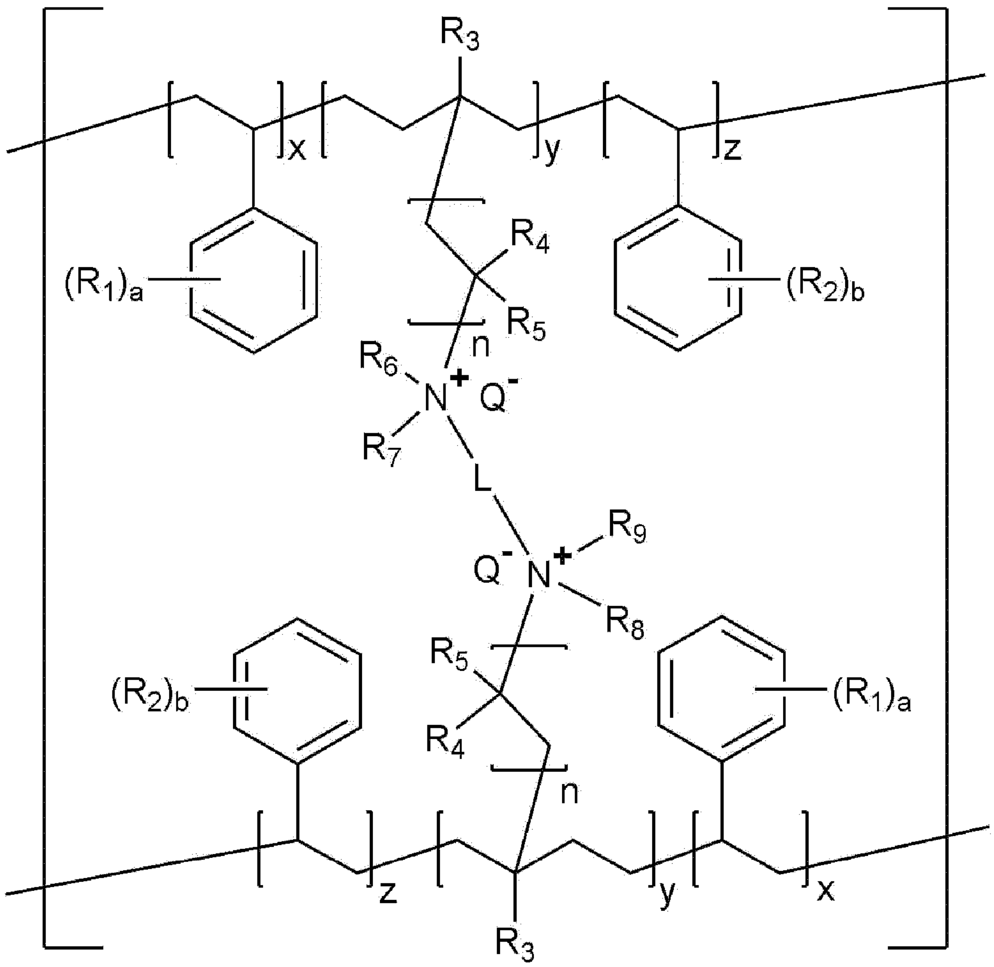

[Chemical Formula 1-3]

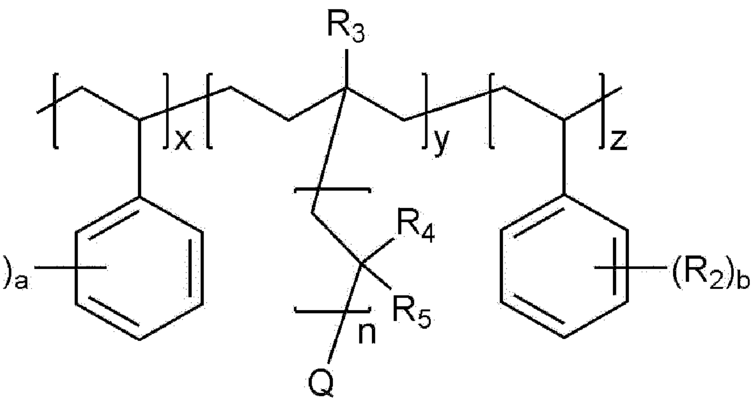

[Chemical Formula 1b]

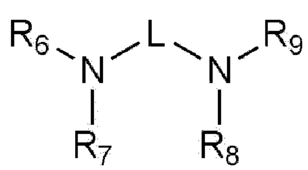

wherein, in Chemical Formulas 1, 1-3 and 1b,
$R_1$ and $R_2$ are each independently halogen or a $C_{1-4}$ alkyl,
a and b are each independently an integer from 0 to 3,
$R_3$ and $R_4$ are each independently hydrogen or a $C_{1-4}$ alkyl,
$R_5$ is a $C_{1-10}$ alkyl,
$R_6$ to $R_9$ are each independently a $C_{1-4}$ alkyl,
L is a $C_{1-10}$ alkylene,
Q is halogen,
n is an integer from 1 to 3, and
x, y and z each means the mole fraction of each repeating unit in the polymer, and x+y+z=1.

**17.** The method according to claim 16, wherein:
in step 1, the organic solvent is one or more selected from the group consisting of tetrahydrofuran, chloroform, toluene, and dichloromethane.

**18.** The method according to claim 16, wherein:
the drying in step 2 is carried out at 40 to 80°C for 12 to 24 hours.

**19.** The method according to claim 16, wherein:
after step 2, a heat treatment step is further carried out at 80 to 150°C for 24 to 72 hours.

**20.** The method according to claim 16, wherein:
the anion exchange membrane is produced to a thickness of 20 to 80 um.

【FIG. 1】

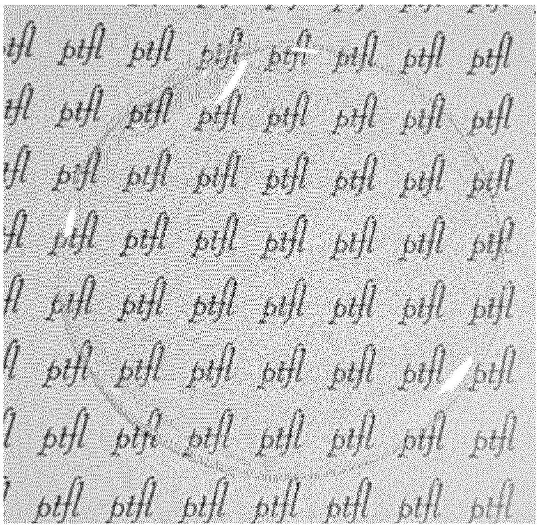

【FIG. 2】

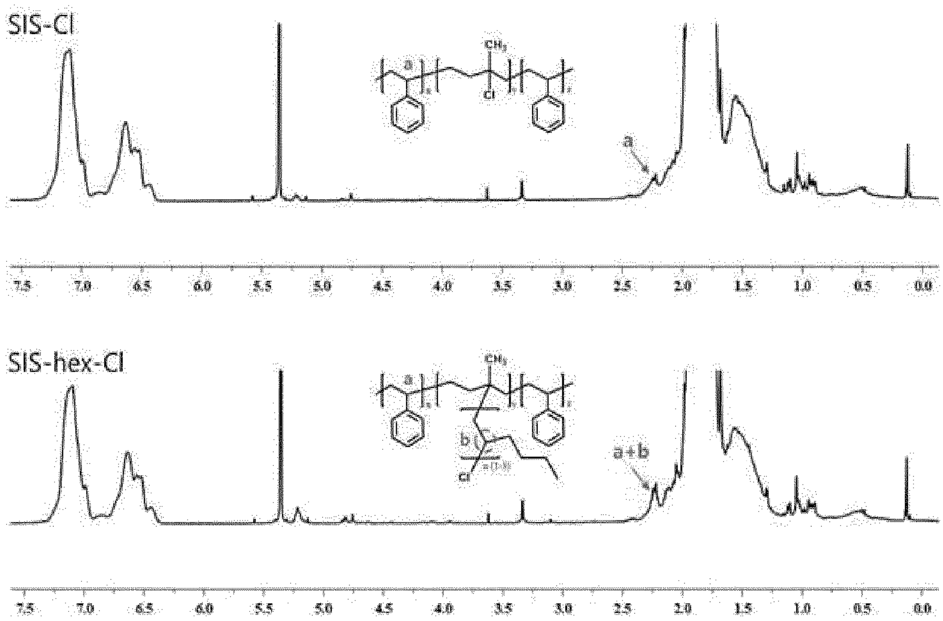

【FIG. 3】

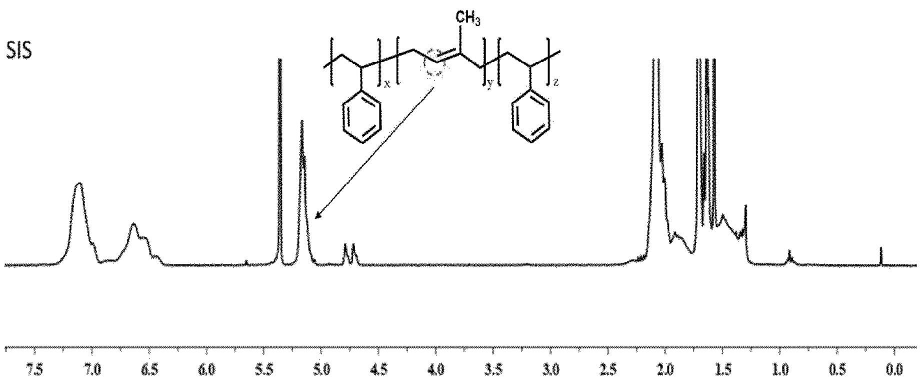
SIS
7.5
7.0
6.5
6.0
5.5
5.0
4.5
4.0
3.5
3.0
2.5
2.0
1.5
1.0
0.5
0.0

【FIG. 4】

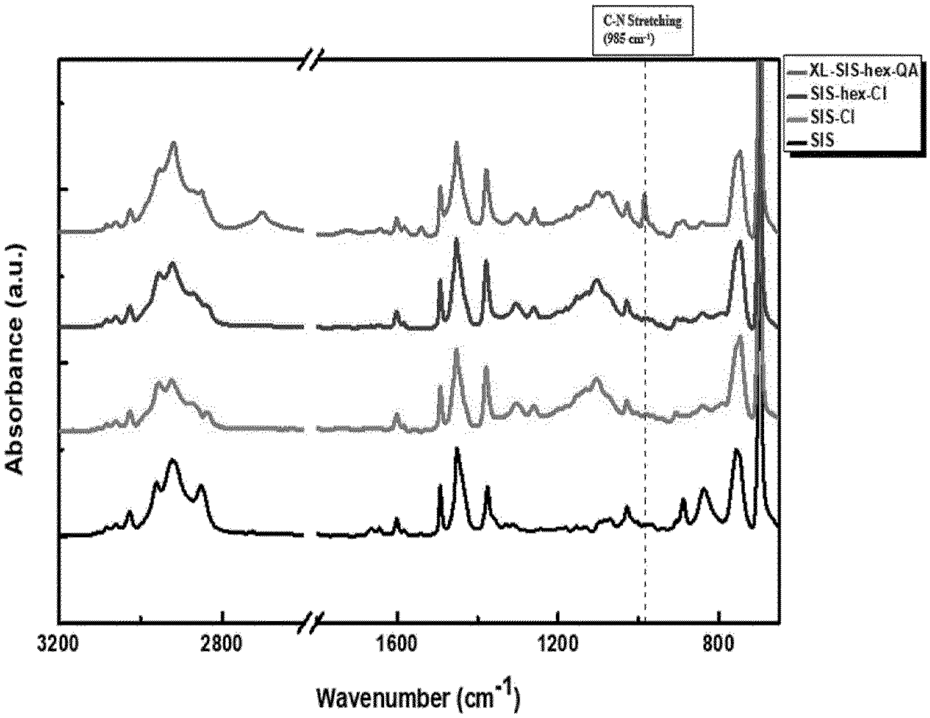
C-N Stretching
(985 cm-1)
XL-SIS-hex-QA
SIS-hex-Cl
SIS-Cl
SIS
Absorbance (a.u.)
3200
2800
1600
1200
800
Wavenumber (cm-1)

## INTERNATIONAL SEARCH REPORT

International application No.
**PCT/KR2023/020314**

### A. CLASSIFICATION OF SUBJECT MATTER

**C08F 297/04**(2006.01)i; **C08F 212/08**(2006.01)i; **C08F 212/14**(2006.01)i; **C08F 212/12**(2006.01)i; **C08F 8/32**(2006.01)i; **C08J 5/22**(2006.01)i

According to International Patent Classification (IPC) or to both national classification and IPC

### B. FIELDS SEARCHED

Minimum documentation searched (classification system followed by classification symbols)

C08F 297/04(2006.01); C08J 5/22(2006.01); C08J 7/12(2006.01); C08L 53/02(2006.01); H01M 6/18(2006.01); H01M 8/0239(2016.01); H01M 8/0245(2016.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 중합체(polymer), 음이온교환(anion exchange), 막(membrane), 가교(cross-linking), 스티렌(styrene), 디엔(diene)

### C. DOCUMENTS CONSIDERED TO BE RELEVANT

| Category* | Citation of document, with indication, where appropriate, of the relevant passages | Relevant to claim No. |
|---|---|---|
| A | CN 109384944 A (DALIAN INSTITUTE OF CHEMICAL PHYSICS, CHINESE ACADEMY OF SCIENCES) 26 February 2019 (2019-02-26)<br>See claims 1-7; and figure 1. | 1-20 |
| A | WO 2009-007922 A2 (ACTA S.P.A. et al.) 15 January 2009 (2009-01-15)<br>See claims 1-14 | 1-20 |
| A | CN 109265715 A (DALIAN UNIVERSITY OF TECHNOLOGY) 25 January 2019 (2019-01-25)<br>See claims 1-10. | 1-20 |
| A | JEON, J. Y. et al. Synthesis of aromatic anion exchange membranes by friedel–crafts bromoalkylation and cross-linking of polystyrene block copolymers. Macromolecules. 2019, vol. 52, no. 5, pp. 2139-2147.<br>See entire document. | 1-20 |
| A | KR 10-2016-0122703 A (TOKUYAMA CORPORATION) 24 October 2016 (2016-10-24)<br>See entire document. | 1-20 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020314**

| Patent document cited in search report | Publication date (day/month/year) | Patent family member(s) | Publication date (day/month/year) |
|---|---|---|---|
| CN 109384944 A | 26 February 2019 | None | |
| WO 2009-007922 A2 | 15 January 2009 | CN 101743660 A | 16 June 2010 |
| | | EP 2176913 A2 | 21 April 2010 |
| | | IT FI20070152 A1 | 11 January 2009 |
| | | JP 2010-533222 A | 21 October 2010 |
| | | US 2010-0137460 A1 | 03 June 2010 |
| | | WO 2009-007922 A3 | 05 March 2009 |
| CN 109265715 A | 25 January 2019 | CN 109265715 B | 02 July 2021 |
| KR 10-2016-0122703 A | 24 October 2016 | CA 2944132 A1 | 20 August 2015 |
| | | CN 105980418 A | 28 September 2016 |
| | | EP 3106476 A1 | 21 December 2016 |
| | | TW 201538542 A | 16 October 2015 |
| | | US 2017-0174800 A1 | 22 June 2017 |
| | | WO 2015-122320 A1 | 20 August 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220176765